# EUROPÄISCHE PATENTSCHRIFT

(11) **EP 2 008 855 B1**
(45) Veröffentlichungstag und Bekanntmachung des Hinweises auf die Patenterteilung: **13.06.2012**
(21) Anmeldenummer: 08008508.7
(22) Anmeldetag: 06.05.2008
(51) Int. Cl.: B60K 13/04

(54) **Steifer träger für eine elastische Aufhängung**
Rigid support for an elastic mounting
Support rigide pour une suspension élastique

(30) Priorität: 28.06.2007 DE 202007009071 U
(43) Veröffentlichungstag der Anmeldung: 31.12.2008
(73) Patentinhaber: Anvis Deutschland GmbH, 36396 Steinau an der Strasse (DE)
(72) Erfinder: Heckmann, Gerhard, 36381 Schlüchtern (DE); Kolb, Ralf, 36381 Schlüchtern (DE); Möller, Ralf, 36381 Schlüchtern (DE)
(74) Vertreter: Schmid, Nils T.F.

(56) Entgegenhaltungen:
- EP-A2- 2 009 258
- DE-A1- 1 530 534
- DE-A1- 10 023 781
- DE-C1- 19 741 462
- DE-U1- 8 714 888
- DE-U1-202004 011 472
- FR-A1- 2 878 194
- JP-A- 5 141 237
- JP-A- 57 044 720

## Beschreibung

Die Erfindung betrifft einen steifen Träger für eine elastische Aufhängung zum akustisch entkoppelnden Tragen einer Abgasanlage eines Kraftfahrzeugs.

Eine elastische Aufhängung hat als Hauptbestandteil einen steifen Träger, an dem ein mit einer Abgasanlage zu verbindender Haltebügel über ein Dämpfungsteil elastisch angekoppelt ist. Eine derartige elastische Aufhängung ist beispielsweise aus DE 100 23 781 A1 bekannt, bei der eine in einem Querschnitt L-förmige, an die Kraftfahrzeugkarosserie anzuflanschende Tragplatte zwei Durchgänge eingebracht sind, in denen jeweils ein glockenförmiges Dämpfungsteil eingeknüpft ist. Der Haltebügel hat eine Widerhakenstruktur, die an einem konisch zulaufenden Ende des Glockendämpfungsteils in einem Loch eingeknüpft ist. Für das Dämpfungsteil wird ein Ethylen-Propylen-Dien-Kautschuk vorgeschlagen, wobei die Tragplatte aus Stahlblech gebildet ist. Die Tragplatte ist mit einer Korrosionsschutzschicht überzogen.

DE 20 2004 011 472 U1 offenbart eine Vorrichtung zur Aufhängung einer Abgasanlage an einem Kraftfahrzeug gemäß dem Oberbegriff des Anspruchs 1. Ein elastisches Lager zur Aufhängung einer Abgasanlage ist aus DE 197 41 462 C1 bekannt.

Es ist Aufgabe der Erfindung, eine elastische Aufhängung für eine Abgasanlage eines Kraftfahrzeugs dahingehend zu verbessern, daß bei ausreichender elastischer Dämpfungseigenschaft und akustischer Entkoppelung eine lange Lebensdauer eine wesentlich kostengünstigere und leichtere Herstellung erreichbar sind, wobei der Korrosionsschutz verbessert ist.

Diese Aufgabe wird durch die Merkmale von Anspruch 1 gelöst. Danach ist ein steifer Träger für eine elastische Aufhängung zum Tragen der Abgasanlage eines Kraftfahrzeugs mit einer Flanschbasis zum Anbringen an ein Karosserieteil, einem an der Flanschbasis wegerstreckenden Haltearm und einem an den Haltearm befestigten Haltestift zum Ankoppeln an einer elastischen Schlaufe versehen, die mit der Abgasanlage zu verbinden ist. Erfindungsgemäß sind die Flanschbasis, der Haltearm und der Haltestift aus einem Kunststoffstück gefertigt. Weitere bevorzugte Ausgestaltungen der Erfindung sind in den Unteransprüchen angegeben.

Mit der erfindungsgemäßen Maßnahme einen steifen Träger bestehend aus einer Flanschbasis, einem Haltearm und einem Haltestift aus einem Kunststoffstück zu fertigen, besteht die Möglichkeit, besonders leichtgewichtige, steife Träger für elastische Aufhängungen von Abgasanlagen zu schaffen. Trotz der Verwendung eines Kunststoffmaterials für den steifen Träger stellte sich bei Versuchen heraus, daß die Betriebsfestigkeit und Lebensdauer solcher Aufhängungen im Hinblick auf die in der Nähe der Abgasanlage sehr hohen Betriebstemperaturen nicht beeinträchtigt wurden. Vielmehr konnte festgestellt werden, daß die Langlebigkeit derartiger Aufhängungen aufgrund der verbesserten Korrosionsschutzes verbessert wurden.

Bei einer bevorzugten Ausführung der Erfindung sind die Flanschbasis, der Haltearm und der Haltestift aus einem Polyamidstück oder Duroplastteil gefertigt, insbesondere spritzgegossen. Dabei kann dem Kunststoff Glasfasern zugeführt sein.

Vorzugsweise ist die Flanschbasis als langgestreckte Zunge mit wenigstens einem Montageloch ausgebildet.

Bei einer bevorzugten Ausführung der Erfindung erstreckt sich der Haltearm im wesentlichen lotrecht zu einer ebenen Montagefläche der Flanschbasis.

Vorzugsweise erstreckt sich der Haltestift im wesentlichen orthogonal von dem Haltearm, wobei insbesondere der Haltestift parallel zu einer ebenen Montagefläche der Flanschbasis liegt.

Bei einer Weiterbildung der Erfindung weist der Haltestift eine Querschnittsverdickung im Bereich eines freien Endes auf, bei dem der Haltestift knüpfend mit der Schlaufe verbindbar ist.

Bei einer Weiterbildung der Erfindung hat der Haltearm einen U-förmigen Querschnitt, wobei sich U-Schenkel des Haltearms von der Flanschbasis weg erstrecken. Vorzugsweise ist der Haltestift an einer die Schenkel des U-förmigen Haltearms verbindenden Grundplatte angeordnet.

Bei einer Weiterbildung der Erfindung hat die Flanschbasis eine lösbare Zentriereinrichtung, insbesondere ein Zentrierloch zum Eingreifen eines Zentrierzapfens, der an dem Karosserieteil ortsfest angebracht ist.

Bei einer bevorzugten Ausführung der Erfindung hat der Haltearm an dessen der Flanschbasis zugewandten Abschnitt einen H-förmigen Abschnitt und einen von der Flanschbasis abgewandten Endabschnitt einen U-förmigen Querschnitt.

Des weiteren betrifft die Erfindung eine Anordnung zum elastischen Aufhängen einer Abgasanlage eines Kraftfahrzeugs an einem Karosserieteil. Die erfindungsgemäße Anordnung hat einen erfindungsgemäßen steifen Träger und eine elastische Schlaufe zum Verbinden des Träger mit der Abgasanlage.

Die erfindungsgemäße Anordnung kann einen weiteren steifen Träger ähnlichen oder identischen Aufbaus vorsehen. Die beiden steifen Träger sind einander derart gegenüberliegend angeordnet, daß die Längserstreckungsrichtungen der Haltestifte im wesentlichen parallel zueinander verlaufen, insbesondere im wesentlichen miteinander fluchten.

Vorzugsweise hat die Flanschbasis ein Zentrierloch, in dem ein Zentrierzapfen der Fahrzeugkarosserie lösbar eingreift.

Des weiteren kann an der Flanschbasis ein Montageloch vorgesehen sein, um den steifen Träger an dem Karosserieteil zu befestigen.

Vorzugsweise kann für das einteilige Kunststoffteil ein Polyamid 66 von etwa 15 bis 50%, vorzugsweise 35%, Glasfasern verwendet werden.

Für die Schlaufe kann vorzugsweise ein Silikon-Kautschuk, insbesondere VMQ, eingesetzt werden. Dieses Material für die Schlaufe ist insbesondere bei Benzinmotoren geeignet. Alternativ kann die Schlaufe auch aus einem EPDM-Gummi, insbesondere einem EPDM-Peroxid, gebildet sein. Dieses Schlaufenmaterial eignet sich besonders für Dieselmotoren.

Die Schlaufe kann als Ringteil ausgebildet sein, das innenseitig Verstärkungsstreben aufweist. Die Verstärkungsstreben können zwei Durchgänge oder Lagerbuchsen einerseits zum Anbinden des Haltestifts und andererseits zum Aufnehmen des Haltebügels zum Greifen der Abgasanlage zumindest teilweise definieren.

Weitere Vorteile, Eigenschaften und Merkmale der Erfindung werden durch die folgende Beschreibung einer bevorzugten Ausführung der Erfindung anhand der beiliegenden Zeichnungen deutlich, in denen zeigen:
- Figur 1: eine perspektivische Ansicht eines erfindungsgemäßen steifen Trägers für eine elastische Aufhängung einer Abgasanlage; und
- Figur 2: eine weitere perspektivische Ansicht der Trägers gemäß Figur 1 aus einer unterschiedlichen Perspektive.

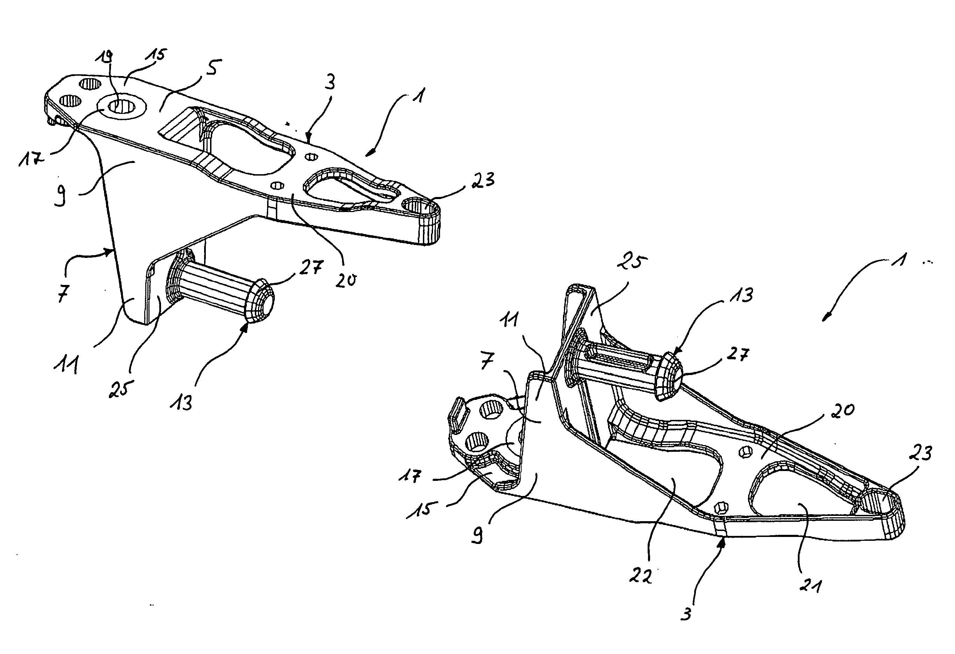

In den Figuren 1 und 2 ist der steife Träger einer elastischen Aufhängeanordnung zum Tragen einer Abgasanlage eines Kraftfahrzeugs (nicht dargestellt) im allgemeinen mit der Bezugsziffer 1 versehen.

Der steife Träger 1 umfaßt im wesentlichen drei Hauptbestandteile, die aus einem Kunststoffteil in einem einzigen Produktionsschritt gefertigt sind: eine Flanschbasis 3 mit einer ebenen, an eine Außenseite eines nicht dargestellten Karosserieteils angepaßten Montagefläche 5, einen Haltearm 7, der an dessen der Flanschbasis 3 zugewandten Abschnitt 9 einen H-förmigen Querschnitt und an dessen dem Flanschabschnitt 3 abgewandten Endabschnitt 11 einen U-förmigen Querschnitt aufweist, und einen Haltestift 13, der sich im wesentlichen parallel zur Flanschbasis 3 und senkrecht zum Haltearm 7 erstreckt.

Die Flanschbasis 3 ist als plattenförmiges Zungenteil ausgebildet mit einem ersten Befestigungsplattenabschnitt 15, an dem ein mit einer Hülse 17 aus Aluminium oder Stahl verstärktes Montageloch 19 vorgesehen ist, über das der steife Träger 1 mit dem nicht dargestellten Karosserieteil verschraubt wird. An einem größeren, zweiten Befestigungsplattenabschnitt 20 sind zwei Materialaussparungen 21, 22 zur Verringerung des Gewichts des steifen Trägers 1 vorgesehen. An einem sich verjüngenden Endabschnitt des zweiten Befestigungsplattenabschnitts 20, insbesondere an diesem Ende, ist ein Positionierloch 23 vorgesehen, in den ein an dem Karosserieteil befestigter Zentrierzapfen (nicht dargestellt) lösbar eingebracht ist, so daß über die Verschraubung an dem ersten Plattenabschnitt 11 und die Positionierung 23 eine statistisch bestimmte Position des steifen Trägers 1 bezüglich der Fahrzeugkarosserie sichergestellt ist. Im montierten Zustand erstreckt sich der Haltearm 7 seitlich an der Abgasanlage vorbei und hin zum Fahrbelag (nicht dargestellt), wobei der zweite Befestigungsplattenabschnitt 20 in einem Freiraum zwischen dem Karosserieteil und der Abgasanlage ragt.

Im Bereich des Endabschnitts 11 des Haltearms 7 geht der Haltestift 13 in eine die Schenkel des U-förmigen Halteteilabschnitts verbindende Grundplatte 25 einstückig kontinuierlich über und erstreckt sich lotrecht von der Grundplatte 25 weg. Der Haltestift 13 hat an dessen freien Ende eine im Querschnitt pfeilförmige Verdickung 27, die mit der Grundplatte 25 des Haltearms eine Einschnürung 29 begrenzt. Mit der Einschnürung 29 steht eine nicht dargestellte elastische Schlaufe eingeknüpft in Eingriff. Die nicht dargestellte Schlaufe wird anschließend über Metallbügel (nicht dargestellt) mit der Abgasanlage verbunden.

Die Flanschbasis 3, der Haltearm 7 und der Haltestift 13 sind aus einem Kunststoffteil, insbesondere einem Polyamidstück oder Duroplastteil, gefertigt. Hierbei können verschiedene Polyamide, wie PA 6, PA 46, PA 66 + 6, verwendet werden. Vorzugsweise ist ein sogenanntes Polyamid 66 GF 35 mit einem Anteil 35% Glasfaser einzusetzen.

### Bezugszeichenliste

- 1: steifer Träger
- 3: Flanschbasis
- 5: Montagefläche
- 7: Haltearm
- 11: Endabschnitt
- 13: Haltestift
- 15: erster Befestigungsplattenabschnitt
- 17: Hülse
- 19: Montageloch
- 20: zweiter Befestigungsplattenabschnitt
- 21, 22: Materialaussparung
- 23: Zentrierloch
- 25: Grundplatte
- 27: Verdickung
- 29: Einschnürung

## Patentansprüche

1. Steifer Träger für eine elastische Aufhängung zum Tragen einer Abgasanlage eines Kraftfahrzeugs, umfassend eine Flanschbasis (3) zum Anbringen des steifen Trägers (1) an ein Karosserieteil, einen von der Flanschbasis (3) wegerstreckenden Haltearm (7) und einen an dem Haltearm (7) fest angeordneten Haltestift (13) zum Anbinden einer elastischen Schlaufe, die mit der Abgasanlage zu verbinden ist, **dadurch gekennzeichnet, dass** die Flanschbasis (3), der Haltearm (7) und der Haltestift (13) aus einem Kunststoffstück gefertigt sind.

2. Träger nach Anspruch 1, bei dem die Flanschbasis (3), der Haltearm (7) und der Haltestift (13) aus einem Polyamidstück oder Duroplast gefertigt, insbesondere spritzgegossen, sind.

3. Steifer Träger nach Anspruch 1 oder 2, bei dem das Kunststoffstück Glasfasern enthält.

4. Träger nach einem der Ansprüche 1 bis 3, bei dem die Flanschbasis (3) als langgestreckte Zunge mit wenigstens einem Montageloch (19) ausgebildet ist.

5. Träger nach einem der Ansprüche 1 bis 4, bei dem sich der Haltearm (7) im wesentlichen lotrecht zu einer ebenen Montagefläche (15) der Flanschbasis (3) weg erstreckt.

6. Träger nach einem der Ansprüche 1 bis 5, bei dem sich der Haltestift (13) im wesentlichen orthogonal von dem Haltearm (7) erstreckt, wobei insbesondere der Haltestift (13) parallel zu einer ebenen Montagefläche (5) der Flanschbasis (3) liegt.

7. Träger nach einem der Ansprüche 1 bis 6, bei dem der Haltestift (13) eine Querschnittsverdickung im Bereich eines freien Endes aufweist, mit dem der Haltestift (13) knüpfend mit der elastischen Schlaufe verbindbar ist.

8. Träger nach einem der Ansprüche 1 bis 7, bei dem der Haltearm (7) einen U-förmigen Querschnitt aufweist, wobei sich U-Schenkel des Haltearms von der Flanschbasis weg erstrecken.

9. Träger nach Anspruch 8, bei dem der Haltestift (13) an einer die Schenkel des U-förmigen Haltearms (7) verbindenden Grundplatte (25) fest angeordnet ist.

10. Träger nach einem der Ansprüche 1 bis 9, bei dem die Flanschbasis (3) eine lösbare Zentriereinrichtung, insbesondere ein Zentrierloch, zum Eingreifen eines Zentrierzapfens an dem Karosserieteil, umfaßt.

11. Träger nach einem der Ansprüche 1 bis 9, **dadurch gekennzeichnet, daß** der Haltearm (7) an dessen der Flanschbasis (3) zugewandten Abschnitt (9) einen H-förmigen Querschnitt und einen von der Flanschbasis (3) abgewandten Endabschnitt (11) einen U-förmigen Querschnitt aufweist.

12. Anordnung zum elastischen Aufhängen einer Abgasanlage eines Kraftfahrzeugs an ein Karosserieteil mit einem nach einem der Ansprüche 1 bis 11 ausgebildeten steifen Träger (1) und einer elastischen Schlaufe zum Verbinden des steifen Trägers (1) mit der Abgasanlage.

13. Anordnung nach Anspruch 12, bei der ein weiterer steifer Träger (1) ähnlichen oder identischen Aufbaus vorgesehen ist, wobei die beiden steifen Träger einander derart gegenüberliegend angeordnet sind, daß die Längserstreckungsrichtungen der Haltestifte (13) im wesentlichen parallel zueinander verlaufen, insbesondere im wesentlichen miteinander fluchten.

14. Anordnung nach Anspruch 12 oder 13, bei der die Flanschbasis (3) ein Zentrierloch (23) umfaßt, in dem ein Zentrierzapfen lösbar eingreift.

15. Anordnung nach einem der Ansprüche 12 bis 14, bei der an der Flanschbasis (3) ein Montageloch (19), insbesondere nur ein Montageloch (19), zum Befestigen des steifen Trägers (1) an dem Karosserieteil vorgesehen ist.

## Claims

1. Rigid support for an elastic suspension for supporting an exhaust system of a motor vehicle comprising a flange base (3) for fitting the rigid support (1) to a body part, a supporting arm (7) extending away from the flange base (3) and a supporting pin (13) firmly disposed at the supporting arm (7) for attaching an elastic loop that is to be connected with the exhaust system, **characterised in that** the flange base (3), the supporting arm (7) and the supporting pin (13) are made of one plastic piece.

2. Support according to claim 1, in which the flange base (3), the supporting arm (7) and the supporting pin (13) are made of one piece of polyamide or thermoset material and are in particular injection moulded.

3. Rigid support according to claim 1 or 2, in which the plastic piece contains glass fibres.

4. Support according to one of the claims 1 to 3, in which the flange base (3) is formed as an elongated tongue with at least one mounting hole (19).

5. Support according to one of the claims 1 to 4, in which the supporting arm (7) extends away, essentially vertically, from a flat mounting surface (15) of the flange base (3).

6. Support according to one of the claims 1 to 5, in which the supporting pin (13) extends essentially orthogonally from the supporting arm (7), wherein in particular the supporting pin (13) is disposed parallel to a flat mounting surface (5) of the flange base (3).

7. Support according to one of the claims 1 to 6, in which the supporting pin (13) has a cross-sectional bulge in the area of a free end with which the supporting pin (13) can be connected to the elastic loop in a buttoning manner.

8. Support according to one of the claims 1 to 7, in which the supporting arm (7) has a U-shaped cross-section, wherein U-legs of the supporting arm extend away from the flange base.

9. Support according to claim 8, in which the supporting pin (13) is firmly disposed at a base plate (25) connecting the legs of the U-shaped supporting arm (7).

10. Support according to one of the claims 1 to 9, in which the flange base (3) comprises a detachable centring device, in particular a centring hole, for engagement of a centring pin at the body part.

11. Support according to one of the claims 1 to 9, **characterised in that** the supporting arm (7) has a H-shaped cross-section at its section (9) facing the flange base (3) and a U-shaped cross-section at an end section (11) facing away from the flange base (3).

12. Arrangement for elastically suspending an exhaust system of a motor vehicle at a body part with a rigid support (1) according to one of the claims 1 to 11 and an elastic loop for connecting the rigid support (1) with the exhaust system.

13. Arrangement according to claim 12, in which a further rigid support (1) of similar or identical structure is provided, wherein the two rigid supports are arranged facing each other in such a way that the longitudinal extensions of the supporting pins (13) are essentially parallel and in particular are aligned with each other.

14. Arrangement according to claim 12 or 13, in which the flange base (3) comprises a a centring hole (23), in which a centring pin detachably engages.

15. Arrangement according to one of the claims 12 to 14, in which a mounting hole (19), in particular only one mounting hole (19) is provided at the flange base (3) for fixing the rigid support (1) to the body part.

## Revendications

1. Support rigide pour une suspension élastique pour supporter un système d'échappement d'un véhicule automobile, comprenant une base de bride (3) pour adapter le support rigide (1) à une pièce de carrosserie, un bras de support (7) s'étendant de la base de bride (3) en s'éloignant de celle-ci et une cheville de support (13) fermement agencé au bras de support (7) pour relier une boucle élastique qui doit être connecté avec le système d'échappement, **caractérisé en ce que** la base de bride (3), le bras de support (7) et la cheville de support (13) sont faites d'un seul morceau de matière plastique.

2. Support selon la revendication 1, dans lequel la base de bride (3), le bras de support (7) et la cheville de support (13) sont faits d'un morceau de polyamide ou de résine thermodurcissable, notamment sont faites par moulage par injection.

3. Support rigide selon la revendication 1 ou 2, dans lequel le morceau de matière plastique contient des fibres de verre.

4. Support selon l'une des revendications 1 à 3, dans lequel la base de bride (3) est formée d'une languette étendue avec au moins un trou de montage (19).

5. Support selon l'une des revendications 1 à 4, dans lequel le bras de support (7) s'étend notamment verticalement d'une surface de montage plane (15) de la base de bride (3) en s'éloignant de celle-ci.

6. Support selon l'une des revendications 1 à 5, dans lequel la cheville de support (13) s'étend notamment orthogonalement du bras de support (7), la cheville de support (13), notamment étant agencée en parallèle par rapport à une surface de montage plane (5) de la base de bride (3).

7. Support selon l'une des revendications 1 à 6, dans lequel la cheville de support (13) comporte un épaissement de section à l'endroit d'une extrémité libre, avec lequel la cheville de support (13) peut être connectée avec la boucle élastique de façon boutonnante.

8. Support selon l'une des revendications 1 à 7, dans lequel le bras de support (7) a une section en forme de U, des branches du U s'étendant de la base de bride en s'éloignant de celle-ci.

9. Support selon la revendication 8, dans lequel la cheville de support (13) est fermement agencée à une plaque de base (25) lient les branches du bras de support (7) en forme de U.

10. Support selon l'une des revendications 1 à 9, dans lequel la base de bride (3) comprend un dispositif de centrage amovible, notamment un trou de centrage, pour l'engagement d'un tenon de centrage à la pièce de carrosserie.

11. Support selon l'une des revendications 1 à 9, **caractérisé en ce que** le bras de support (7) a une section en forme de H à sa section (9) faisant face à la base de bride (3) et une section en forme de U à une section d'extrémité (11) opposé de la base de bride (3).

12. Arrangement pour suspendre élastiquement un système d'échappement d'un véhicule automobile à une pièce de carrosserie avec un support rigide (1) formé selon l'une des revendications 1 à 11 et une boucle élastique pour relier le support rigide (1) avec le système d'échappement.

13. Arrangement selon la revendication 12 dans lequel un autre support rigide (1) de structure similaire ou identique est prévu, les deux supports rigides étant agencés face à face de façon que les directions d'extension longitudinale des chevilles de support (13) ont un cours sensiblement parallèle, notamment sont sensiblement alignés l'un avec l'autre.

14. Arrangement selon la revendication 12 ou 13 dans lequel la base de bride (3) comprend un trou de centrage (23) dans lequel un tenon de centrage est engagé de façon amovible.

15. Support selon l'une des revendications 12 à 14, dans lequel à la base de bride (3) un trou de montage (19) est prévu, notamment seulement un trou de montage (19), pour fixer le support rigide (1) à la pièce de carrosserie.
